# EUROPEAN PATENT APPLICATION

(11) **EP 2 409 794 A1**
(43) Date of publication of application: **25.01.2012**
(21) Application number: 10169951.0
(22) Date of filing: 19.07.2010
(51) Int. Cl.: B21D 51/44, B21D 28/02, B21D 28/20, G01L 5/00

(54) **Apparatus and method with means for detecting fault in manufacturing can end blanks**

(71) Applicant: Crown Packaging Technology Inc, Alsip, IL 60803-2599 (US)
(72) Inventor: Marshall, John,David, Wantage, Oxfordshire OX12 9BP (GB); Davies, Mark,Ian, Wantage, Oxfordshire OX12 9BP (GB)
(74) Representative: Ratliff, Ismay Hilary

(57) **Abstract**

An apparatus for forming can ends or closure blanks. The apparatus comprises an upper tool (10) for pressing a sheet of metal against a lower tool (20). The lower tool (20) is a cut edge tool, which has raised shear points (22) for cutting a blank of metal out of the sheet. The apparatus further comprises one or more sensors, each of which is axially aligned with a shear point and monitors the force applied to the metal at those points.

## Description

### Technical Field

This invention relates to the formation of can end components and to the detection of faults at an early stage in the manufacture of the components for use in ends or other closures in the packaging industry.

### Background Art

In the manufacture of so-called three-piece food cans, a tubular body, which typically includes a welded side seam, is closed at both ends by can ends. These ends are fixed to the can body by a process known as double seaming.

In the manufacture of "two-piece" cans, which are well known for the packaging of beverages, one end is formed integrally with the can body by drawing and wall ironing, and the opposite end is fixed to the body by a double seam.

An apparatus for monitoring the quality of the double seam in real time and throughout its formation, is described in WO2006/125680 A. This monitor can be used to detect faults in different parts of the seam and, for example, identifies incomplete body or can end hooks as well as other abnormal conditions in the double seam which is used for closing of the can.

The double seam monitor of WO2006/125680 A is mainly used at a customer's plant where the cans are filled and closed. As a result, faulty cans are only rejected after filling, even if this occurs prior to dispatch to the final customer such as a supermarket. It would clearly be beneficial in the reduction of waste if faults could be picked up in the end component itself and components rejected prior to dispatch from the manufacturer's factory to the filler or other customer. This invention provides a system for achieving exactly this.

The earliest part of can end or closure manufacture comprises the cutting of a circular blank from a sheet or strip of metal. For the manufacture of can ends for closing food cans, a strip of tinplate is commonly used, with several blanks cut in rows as the sheet is indexed through a blanking press or presses. Should the sheet be misaligned, the press can close over the edge of the sheet. This results in a flat edge on nominally circular blanks cut from that position. Even gross defects may not be spotted and rejected at this stage as the blanking process takes place at a line speed of typically 800 ends/minute. These faulty blanks may only be found when they have been dispatched to the customer who then finds that the closed container leaks due to a faulty seam.

Accordingly, this invention provided a solution to this problem at the early stage of production of can end component blanks.

### Summary of invention

According to the invention, there is provided an apparatus for forming can ends or closure blanks, the apparatus comprising an upper tool for pressing a sheet of metal against a lower tool, the lower tool having raised shear points for cutting a blank of metal out of the sheet, and in which the apparatus further comprises one or more sensors, each of which is axially aligned with a shear point and monitors the force applied to the metal at those points.

Preferably, the lower tool comprises a cut edge tool having a plurality of shear points and the sensors are load cells which are embedded in the cut edge below at least those shear points which, are at expected edge positions of the metal sheet prior to blanking. Alternatively, the sensors could, for example, be embedded in the support component for the cut edge tool.

Generally, the apparatus further comprises instrumentation for processing signals from the sensors, which correspond to the load applied at one or more parts of the blanking process. These processed signals may provide a force profile for the blank, which provides real time or near real time detection of clipped end blanks.

According to another aspect of the present invention, there is provided a method of forming can end or closure blanks, the method comprising: feeding a sheet of metal into a blanking apparatus; pressing the metal sheet against a cut edge tool which has raised shear points for cutting a blank of metal out of the sheet; sensing the applied force at one or more of the shear points.

The method may further comprise processing signals obtained from the sensing step. Preferably, the processing step provides a force profile representing each stage of the cutting operation.

The method may further comprise detecting piercing portions of the force profile and rejecting blanks, which are missing a distinct piercing portion.

### Brief description of drawings

The invention will now be described, by way of example only, with reference to the figures, in which:

Figure 1 is a schematic perspective view of a blanking press in its position prior to cutting a blank:

Figure 2 is a trace of a typical profile for blanking force measurements over time;

Figure 3 is a schematic perspective view of a blanking press in its position as a shear point contacts the tinplate;

Figure 4 is a schematic perspective view of a blanking press in its position as a shear point pierces the tinplate;

Figure 5 is a schematic perspective view of a blanking press in its position as the shear progresses around the cut edge;

Figure 6 is a schematic perspective view of a blanking press in its position as the tooling cuts fully through the tinplate and

Figure 7 is a trace of a typical profile for blanking force measurements over time for a blank with missing material (a "clip out").

### Description of embodiments

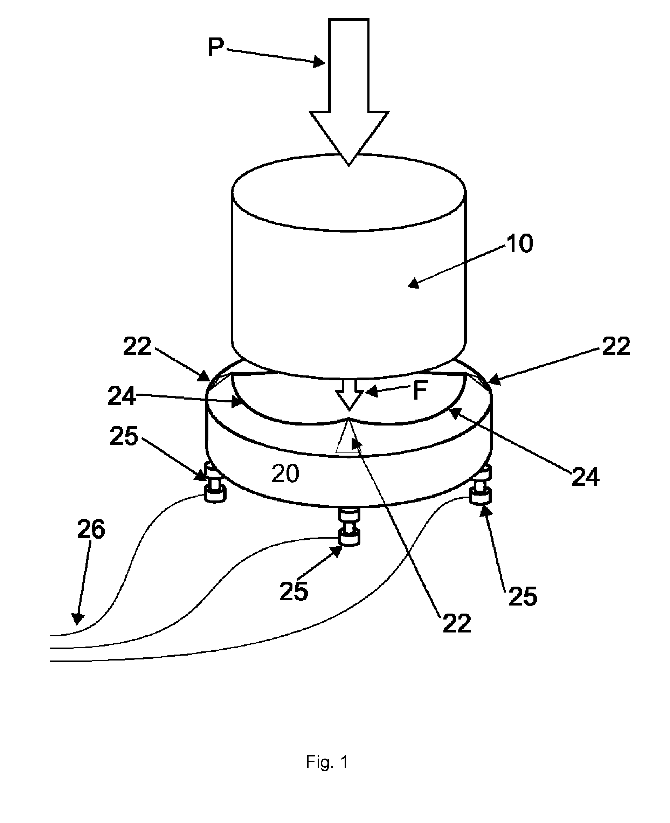

Figure 1 shows schematically a blanking press 10, which in use, cuts a blank out of a sheet of tinplate which is fed between the press and a cut edge tool 20. Cut edge tool 20 includes raised points which act as shear points 22 (three of four visible here). The regions 24 between the shear points are effectively cutting edges, the purpose of which will become clear in the subsequent figures. Directly below each shear point is a sensor 25 in the form of a load cell, connected by cables 26 to instrumentation (not shown).

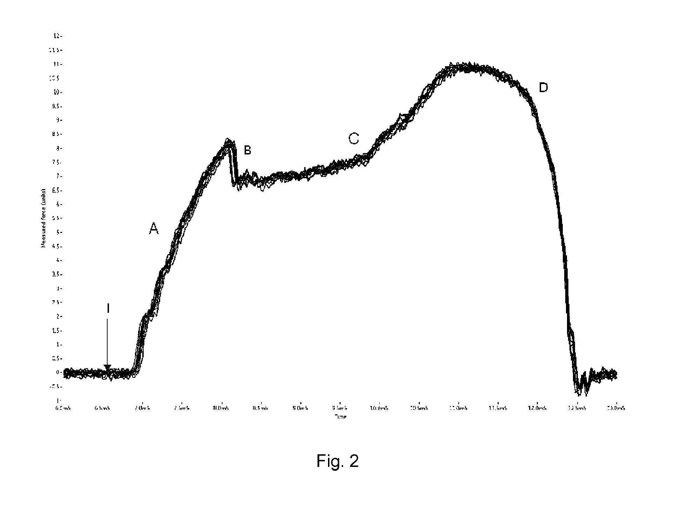

The punch 10 moves downwardly in the direction of arrow P. Material such as a sheet of tinplate resting on the shear points 22 of cut edge tool 20 is thus located between the punch and cut edge tool. In all the drawings, the tinplate has been omitted for clarity. The tooling of figure 1 is at the initial region I on the graph of figure 2, in which minimal location force is sensed by load cells 25. Cables 26 transmit the signals measured by each load cell 25 to instrumentation (not shown) which generates the graph shown in figure 2.

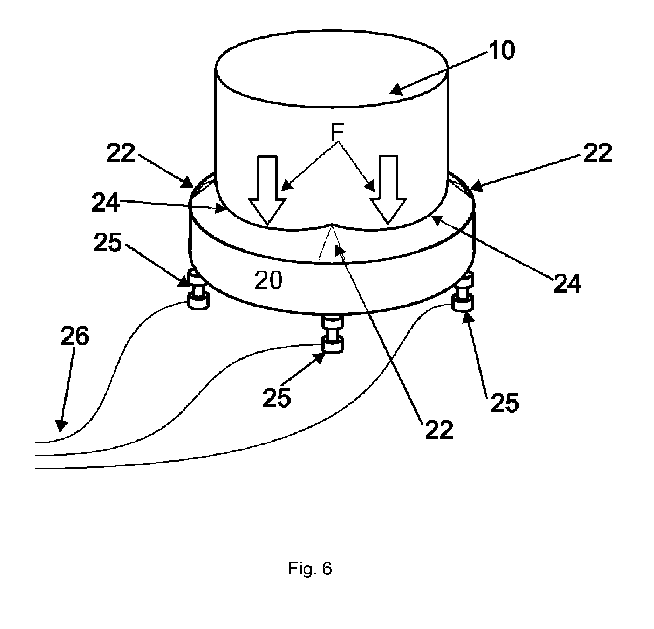

Beyond the flat part I of the graph shown in figure 2, there are four distinct regions A, B, C and D. The inventor has found that the force profile for each region gives a clear indication of a separate stage of blanking. The tooling positions for each of these stages are given in figures 2 to 6.

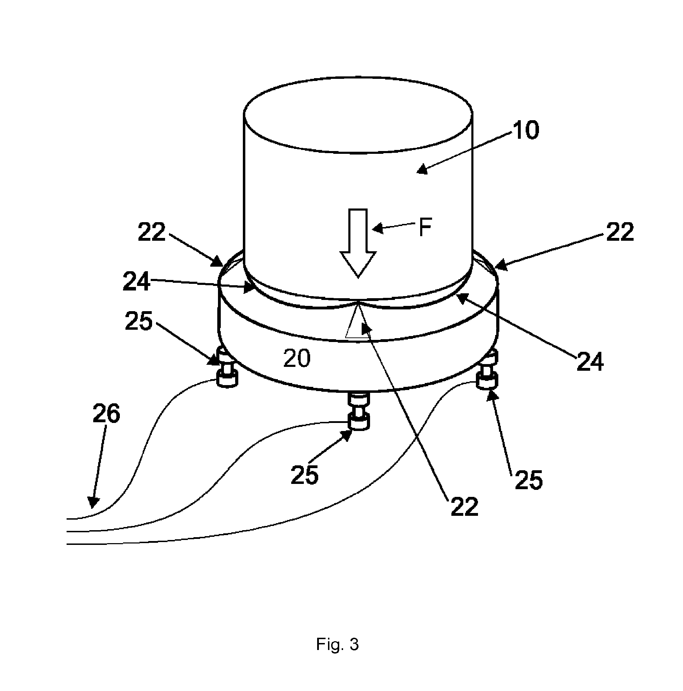

The upward gradient of region A of the graph of figure 2 corresponds to a shearing action. The tooling is in the position shown in figure 3 and the force rises due to the tinplate being stretched by contact with the shear point 22. Force is applied at the shear points and measured directly by the load cell which is in line with the shear point and arrow F in figure 3.

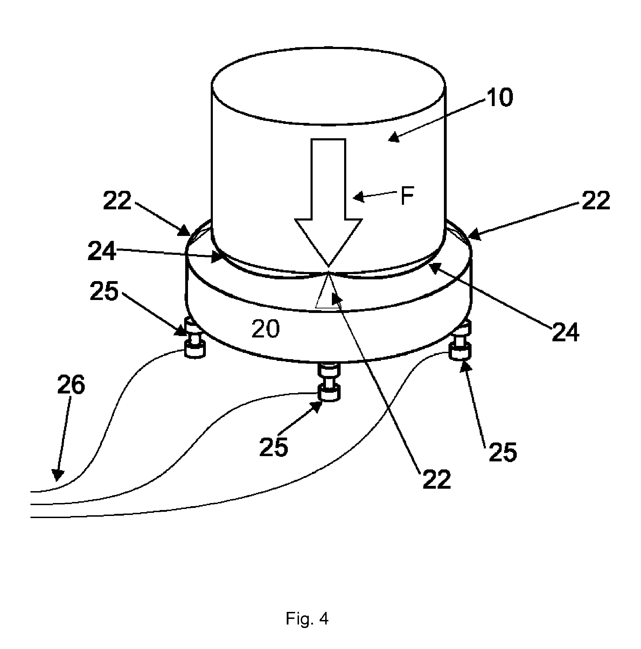

The force profile of figure 2 peaks and drops steeply in region B. This corresponds to the tooling position of figure 4 and represents the peak of the applied force F as the shear point pierces the tin plate. The large applied force arrow F of figure 4 represents the peak.

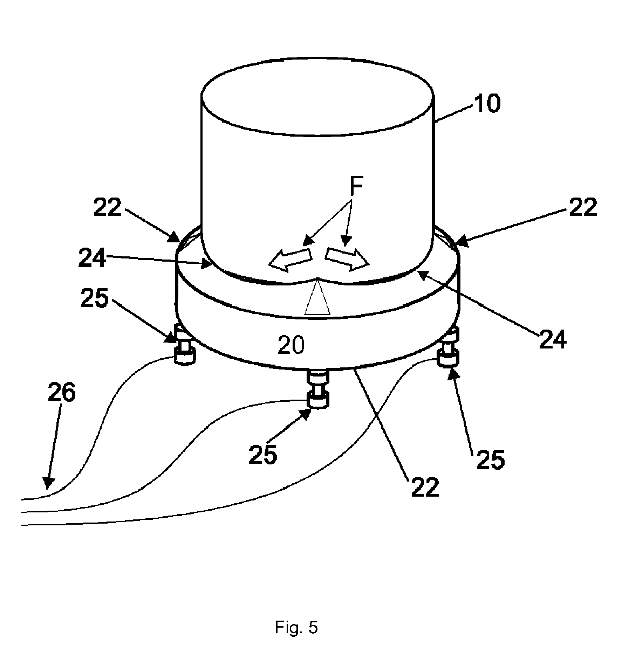

As the shear point progresses around the cutting edges 24 between the shear points, the force rises further. The arrows F of figure 5 thus diverge away from the shear points. The gradual gradient shown in part C of figure 2 represents what is known is "scissoring".

Final piercing D of figure 2 is a more rounded peak but drops off abruptly as the tooling cuts fully through the tinplate. The applied force is no longer directly in line with the load cells and so the forces F are represented in figure 5 by smaller arrows.

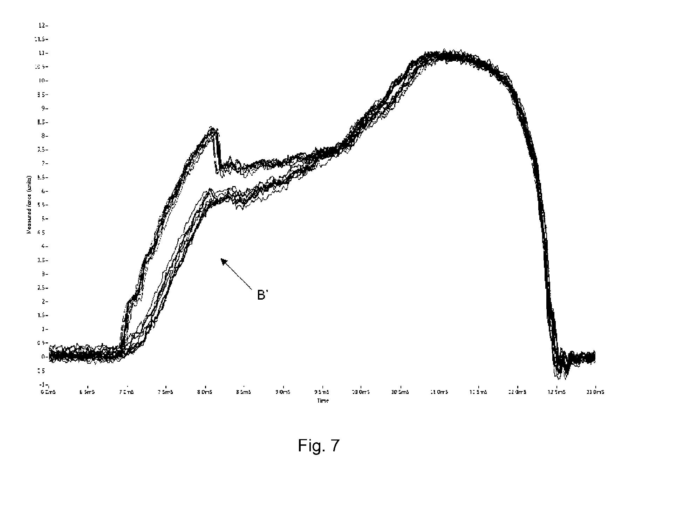

The operations shown in figures 2 to 6 correspond to a normal blanking operation in which there is a complete sheet of tinplate between the tool parts 10 and 20. The situation which arises when there is misalignment or a "clip out" and an absence of material above one or more load cells results in a change in force. This is shown in the lower group of traces on the graph of figure 7.

The groups of traces in figure 7 are all measurements taken at the same single load cell position. They relate to the same experiment, repeated a number of times. The traces of figure 7 form two distinct groups. The upper group of traces corresponds to that of figure 2 and represents "clean" circular cut blanks.

The lower group of traces has no clear initial peak. This group represents the situation when the press tool 10 lowers onto the cut edge tool 20 and finds missing material (sometimes referred to as a "clip out") between the tool parts. When this occurs, the load cell will register the increase in force B' as the upper tool contacts the lower tool but there will be no sudden increase in measured force (i.e. an initial peak in the trace) since there is no material to pierce. Missing material such as a clip-out is usually identified by the signals from just one sensor as demonstrated by the graph of figure 7. The resultant graph of force against time when there is missing material as shown in the lower group of traces in figure 7, continues with a gradual increase in applied force but without any peak. This gradual increase in force until the rounded peak of final piercing (compare part D in figure 2) after which the upper tool is released from the lower cut edge tool.

The invention has been described above by way of example only and changes may be made without departing from the scope of the invention, as defined by the claims.

## Claims

1. An apparatus for forming can end or closure blanks, the apparatus comprising an upper tool for pressing a sheet of metal against a lower tool, the lower tool having raised shear points for cutting a blank of metal out of the sheet, and in which the apparatus further comprises one or more sensors, at least one of which is axially aligned with a shear point and monitors the force applied to the metal at that point.

2. An apparatus according to claim 1, in which the lower tool comprises a cut edge tool having a plurality of shear points and the sensors are load cells which are embedded in the cut edge below at least those shear points which are at expected edge positions of the metal sheet prior to blanking.

3. An apparatus according to claim 1, in which the lower tool comprises a cut edge tool having a plurality of shear points and the sensors are load cells which are embedded in a support component below the cut edge tool and at least under those shear points which are at expected edge positions of the metal sheet prior to blanking.

4. An apparatus according to any one of claims 1 to 3, in which the apparatus further comprises instrumentation for processing signals from the sensors which correspond to the load applied throughout the blanking process.

5. An apparatus according to claim 4, in which the processed signals provide a force profile for the blank.

6. An apparatus according to claim 5, in which the force profile provides real time or near real time detection of clipped end blanks.

7. A method of forming can end or closure blanks, the method comprising: feeding a sheet of metal into a blanking apparatus; pressing the metal sheet against a cut edge tool which has raised shear points for cutting a blank of metal out of the sheet; sensing the applied force at one or more of the shear points.

8. A method according to claim 7, further comprising processing signals obtained from the sensing step.

9. A method according to claim 8, in which the processing step provides a force profile representing each stage of the cutting operation.

10. A method according to any one of claims 7 to 9, in which the method further comprising detecting piercing portions of the force profile and rejecting blanks missing a distinct piercing portion.
